# EUROPÄISCHE PATENTSCHRIFT

(11) **EP 4 114 734 B1**
(45) Veröffentlichungstag und Bekanntmachung des Hinweises auf die Patenterteilung: **31.01.2024**
(21) Anmeldenummer: 21714099.5
(22) Anmeldetag: 04.03.2021
(51) Int. Cl.: B64D 11/06, B60N 3/00

(54) **FLUGGASTSITZ UND SITZREIHE**
AIRCRAFT PASSENGER SEAT AND SEAT ROW
SIÈGE PASSAGER ET RANGÉE DE SIÈGES

(30) Priorität: 05.03.2020 DE 102020106029
(43) Veröffentlichungstag der Anmeldung: 11.01.2023
(73) Patentinhaber: ZIM Aircraft Seating GmbH, 88090 Immenstaad am Bodensee (DE)
(72) Erfinder: JENSEN, Alexander, 88046 Friedrichshafen (DE); DITTRICH, Marc, 88279 Amtzell (DE)
(74) Vertreter: Otten, Roth, Dobler & Partner mbB Patentanwälte
(86) Internationale Anmeldenummer: PCT/EP2021/055457
(87) Internationale Veröffentlichungsnummer: WO 2021/175988

(56) Entgegenhaltungen:
- EP-A1- 3 594 067
- WO-A1-2012/118096
- FR-A1- 2 999 394
- US-A1- 2015 267 757

## Beschreibung

### Stand der Technik

Für die Innen-Ausstattung von Kabinen von Passagierflugzeugen sind Fluggastsitze in mehreren Sitzreihen mit üblicherweise jeweils mehreren Fluggastsitzen in einer Vielzahl von Ausgestaltungen bekannt. In der Regel sind pro Sitzreihe zwei oder mehr Fluggastsitze fluchtend nebeneinander im Flugzeug aufgestellt. Zum bequemen Sitzen weist ein vom Fluggastsitz gebildeter Sitzplatz Polsterungen mit einer Sitzboden-Polsterung und einer Rückenlehnen-Polsterung auf. Außerdem sind verstellbare Zusatzfunktionen am Fluggastsitz realisiert wie eine klappbare Tischplatte.

Bei der Konzeption eines Fluggastsitzes ist zu beachten, dass auf engstem Raum ein hoher Nutz- und Bedienkomfort gegeben ist. Zum Stand der Technik werden die WO 2012/118096 A1,
US 2015/0267757 A1, FR 2999394 A1 und EP 3594067 A1 genannt

### Aufgabe und Vorteile der Erfindung

Aufgabe der vorliegenden Erfindung ist es, einen verbesserten Fluggastsitz bereitzustellen, welcher insbesondere im Hinblick auf den Nutz- und Bedienkomfort vorteilhaft ist.

Diese Aufgabe wird durch die Merkmale der Ansprüche 1 und 12 gelöst.

Weiterbildungen der Erfindung sind in den abhängigen Ansprüchen dargelegt.

Die Erfindung geht aus von einem Fluggastsitz umfassend ein Strukturbauteil, an welchem eine Tischplatte des Fluggastsitzes über eine Gelenkanordnung um eine Schwenkachse der Gelenkanordnung schwenkbar aufgenommen ist, so dass die Tischplatte aus einer an dem Strukturbauteil herangeklappten Aufrecht-Stellung der Tischplatte in eine an dem Strukturbauteil vorstehende Nutzstellung der Tischplatte und zurück aus der Nutzstellung in die Aufrecht-Stellung schwenkbar ist.

Das Strukturbauteil, zum Beispiel bzw. vorzugsweise eine rückwärtige Umhausung des Fluggastsitzes bzw. einer Sitzreihe, ist im in einer Flugkabine eingebauten Zustand des Fluggastsitzes ein aufrecht ausgerichtetes Sitzbauteil vorzugsweise feststehend bzw. unbeweglich bzw. stationär im Fluggastraum bzw. in der Flugkabine des Passagierflugzeuges auf der Bodenfläche vorhanden. Das zum Beispiel schalenförmige bzw. vorzugsweise Flächenabschnitte aufweisende Strukturbauteil erstreckt sich vorzugsweise auf eine Sitzrichtung des Fluggastsitzes bezogen hinter einer Rückenlehne des Fluggastsitzes und deckt diese rückseitig seitlich und gegebenenfalls oberhalb ab. Eine Rückseite des Strukturbauteils, an welcher die Tischplatte vorzugsweise aufgenommen ist, zum Beispiel in einem vertieften Bereich des Strukturbauteils, ist demgemäß der dahinter vorhandenen Sitzreihe bzw. deren Fluggastsitzen zugewandt. Die Tischplatte ist damit von einer Person nutzbar, die in einem Fluggastsitz sitzt, der hinter dem erfindungsgemäßen Fluggastsitz zu einer dort vorhandenen Sitzreihe gehört.

Der Kern der Erfindung liegt darin, dass die Gelenkanordnung eine Dämpfungsvorrichtung umfasst, welche zur Bewegungsdämpfung der Schwenkbewegung der Tischplatte zwischen der Aufrecht-Stellung der Tischplatte und der Nutzstellung der Tischplatte ausgebildet ist. Die Dämpfungsvorrichtung dient zum Dämpfen bzw. zum Abbremsen der Schwenk- bzw. Herunterklapp-Bewegung der Tischplatte. Die Dämpfungsvorrichtung ist zum Beispiel als Reibdämpfer mit einem Reibelement und/oder als Bremsvorrichtung bzw. als Drehdämpfer ausgebildet.

Dies erhöht den Nutzkomfort des Fluggastsitzes für einen Fluggast, der die Tischplatte nutzt. Ein unerwünschtes Aufschlagen der Tischplatte an einem Anschlag der Gelenkanordnung beim Erreichen der Nutzstellung wird vermieden.

Mit der Dämpfungsvorrichtung wird vorzugsweise zumindest auf einem Abschnitt der Schwenkbewegung aus der hochgeklappten Aufrecht-Stellung der Tischplatte in die horizontal ausgerichtete Nutzstellung die Bewegungsdämpfung der Schwenkbewegung bereitgestellt. Die hochgeklappte Aufrecht-Stellung der Tischplatte bedeutet eine an dem Strukturbauteil versenkte bzw. ohne Störkontur herangeschwenkte Stellung, die gesichert ist. Die Tischplatte steht dabei nicht in einen freien Nutzraum hinter dem Strukturbauteil hinein, der zwischen zwei Sitzreihen vorhanden ist. Die hochgeklappte Tischplatte ist vorzugsweise bündig versenkt zu einer Rückseite des Strukturbauteils bzw. in einer Vertiefung, die tiefer liegt als benachbarten Bereich der Rückseite des Strukturbauteils. Die Tiefe der Vertiefung entspricht vorzugsweise in etwa einer Dickenabmessung der Tischplatte.

Die Gelenkanordnung ist zwischen der Tischplatte und dem Strukturbauteil vorhanden bzw. wirksam, zum Beispiel als eine Gelenkanordnung bzw. als ein Beschlag mit zum Beispiel zwei identisch wirkenden Beschlagteilen zum Verschwenken um eine Horizontale um circa 90 Winkelgrade. Die Tischplatte des Fluggastsitzes ist rückseitig an dem Strukturbauteil in der herabgeklappten insbesondere horizontal ausgerichteten Stellung nutzbar für eine Person, die hinter dem Fluggastsitz in einem weiteren Fluggastsitz sitzt. Ein Beschlag weist vorzugsweise zwei relativ zueinander drehbare bzw. miteinander drehbar verbundene Gelenkteile auf.

Das Strukturbauteil weist beispielsweise horizontal beabstandete und gegenüberliegende und vertikal ausgerichtete Randabschnitte und einen dazwischen vorgesehenen vertikalen Flachabschnitt auf, an dem die Tischplatte durch Heranklappen nach oben in einer Vertiefung versenkbar ist. Die Tischplatte ist dann oberhalb der Gelenkanordnung aufrecht bzw. z. B. senkrecht oder leicht geneigt ausgerichtet angeklappt positioniert.

Am Strukturbauteil ist die Tischplatte nach einem Aufheben einer Sicherung bzw. eines Haltemechanismus zum Halten der hochgeklappten Tischplatte, aus der aufrechten Nicht-Nutzungsstellung in die nach hinten vorstehende Nutzstellung herabklappbar mit der Gelenkanordnung.

Die Dämpfungsvorrichtung ist vorzugsweise abgestimmt auf das Gesamtgewicht der Tischplatte, so dass diese kontrolliert bzw. gleichmäßig und gedämpft in die Nutzstellung schwenkbar ist.

Vorzugsweise wirkt die Dämpfungsvorrichtung nur beim Herunterklappen aus der Aufrecht-Stellung in die Nutzstellung, jedoch nicht oder nur unmerklich beim Hochklappen aus der Nutzstellung zurück in die Aufrecht-Stellung, zum Beispiel mit einem Freilauf.

Von Vorteil ist es, wenn im montierten Zustand der Tischplatte an dem Fluggastsitz die Dämpfungsvorrichtung in einem nach außen getrennten Innenbereich der Gelenkanordnung derart untergebracht vorhanden ist, dass die Dämpfungsvorrichtung an der Gelenkanordnung von außen nicht sichtbar ist.

Dies ist zum Beispiel aus optischen Gründen vorteilhaft. Vorzugsweise ist die Gelenkanordnung von einer Außenseite bzw. von Außenabschnitten der Gelenkanordnung verdeckt bzw. daher nicht sichtbar. Die Verdeckung ist vorteilhaft in sämtlichen Schwenkstellungen der Tischplatte gegeben.

Weiter ist die Dämpfungsvorrichtung derart abgestimmt, dass die Bewegungsdämpfung der Schwenkbewegung der Tischplatte über einen Teil-Schwenkbereich eines möglichen Gesamt-Schwenkbereichs der Schwenkbewegung der Tischplatte erfolgt, wobei der Gesamt-Schwenkbereich den Schwenkbereich abdeckt, über welchen die Tischplatte aus der Aufrecht-Stellung in die Nutzstellung verschwenkt. Vorzugsweise ist die Dämpfungsvorrichtung so ausgebildet, dass nach einem nicht gedämpften ersten Schwenkbereich beim nach unten Verschwenken der Tischplatte aus der Aufrecht-Stellung in die Nutzstellung, wobei der nicht gedämpfte Schwenkbereich circa einem Schwenkbereich von 45 Winkelgraden entspricht, die Dämpfungs- bzw. Abbremswirkung einsetzt bzw. beginnt und anhält bis zum Ende der Schwenkbewegung mit Erreichen der Nutzstellung der Tischplatte.

Die erfindungsgemäße Anordnung verkürzt die Gesamtdauer der teils ungedämpften und teils gedämpften Schwenkbewegung aus der hochgeklappten Aufrecht-Stellung in die Nutzstellung der Tischplatte auf ein tolerierbares bzw. minimales Zeitmaß. Vorteilhafterweise ist die Dämpfungsvorrichtung derart abgestimmt, dass die Bewegungsdämpfung der Schwenkbewegung der Tischplatte über einen Teil-Schwenkbereich der Schwenkbewegung der Tischplatte erfolgt, wobei der gedämpfte Teil-Schwenkbereich die Schwenkbewegung der Tischplatte vor Erreichen der Nutzstellung der Tischplatte betrifft.

Vorzugsweise wird beim Abklappen der Tischplatte nach unten die Tischplatte auf einem letzten bzw. unteren Teil-Schwenkbereich vor Erreichen der ruhenden Nutzstellung in der z. B. Horizontalen gedämpft von der Dämpfungsvorrichtung. Eine kurzzeitige mechanische Anschlagbelastung der Gelenkanordnung mit Erreichen der End- bzw. Nutzstellung wird durch das Dämpfen bzw. Abbremsen der Tischplatte vor Erreichen der Nutzstellung sichergestellt. Dies erhöht die Lebensdauer der Gelenkanordnung bzw. beugt Beschädigungen der Gelenkanordnung vor. Darüber hinaus werden Aufschlaggeräusche vermieden.

Überdies ist es vorteilhaft, dass die Dämpfungsvorrichtung derart abgestimmt ist, dass die Bewegungsdämpfung der Schwenkbewegung der Tischplatte über einen Teil-Schwenkbereich der Schwenkbewegung der Tischplatte erfolgt, wobei der Teil-Schwenkbereich einen Schwenkbereich abdeckt, welcher mindestens 50 % des Gesamt-Schwenkbereichs der Schwenkbewegung der Tischplatte beträgt, über welchen die Tischplatte aus der Aufrecht-Stellung der Tischplatte in die Nutzstellung der Tischplatte verschwenkt. Damit wird eine Schwenkgeschwindigkeit der Tischplatte auf ein akzeptables Maß begrenzt.

Vorzugsweise beträgt der gedämpfte Teil-Schwenkbereich mindestens 40 %, vorzugsweise mindestens 30 %, vorzugsweise mindestens 20 % des Gesamt-Schwenkbereichs der Schwenkbewegung der Tischplatte zwischen der Aufrecht-Stellung und der Nutzstellung der Tischplatte.

Nach einer Abwandlung der Erfindung liegt ein Vorteil darin, dass die Dämpfungsvorrichtung derart abgestimmt ist, dass die Bewegungsdämpfung der Schwenkbewegung der Tischplatte über einen Teil-Schwenkbereich eines möglichen Gesamt-Schwenkbereichs der Schwenkbewegung der Tischplatte erfolgt, wobei der Gesamt-Schwenkbereich den Schwenkbereich abdeckt, über welchen die Tischplatte aus der Aufrecht-Stellung in die Nutzstellung verschwenkt, wobei der gedämpfte Teil-Schwenkbereich die Schwenkbewegung der Tischplatte mindestens 30 Winkelgrade, vorzugsweise mindestens 40 Winkelgrade, vorzugsweise mindestens 50 Winkelgrade der Schwenkbewegung der Tischplatte beträgt.

Damit kann gezielt ein Teil-Schwenkbereich vorgegeben werden, der gedämpft erfolgt, im Unterschied zu einem nicht gedämpften und damit schneller überbrückbaren Schwenkbereich der Tischplatte. Der gedämpfte Schwenkbereich ist vorzugsweise der Schwenkbereich, der sich vor Erreichen der Nutzstellung beim Herunterklappen aus der Aufrecht-Stellung der Tischplatte ergibt.

Vorteilhafterweise ist die Tischplatte an einer Wange des Strukturbauteils mit der Gelenkanordnung verbunden, vorzugsweise mit zwei Gelenkanordnungen an gegenüberliegenden Wangen des Strukturbauteils angelenkt. Die gegenüberliegenden beiden Wangen an dem Fluggastsitz bilden nach hinten vorstehende, horizontal beabstandete bzw. gegenüberliegende voneinander getrennte Abschnitte am Strukturbauteil wie der Umhausung. Die Wangen begrenzen zum Beispiel die Vertiefung auf der Rückseite des Fluggastsitzes in welcher die hochgeklappte Tischplatte sich in der Aufrecht-Stellung versenkt untergebracht befindet.

Gemäß einer vorteilhaften Modifikation umfasst die Gelenkanordnung im Bereich der Schwenkachse ein erstes Gelenkteil und ein zweites Gelenkteil, die relativ zueinander drehbar miteinander verbunden sind, wobei das erste Gelenkteil mit der Tischplatte verbunden ist und das zweite Gelenkteil mit dem Strukturbauteil verbunden ist, wobei ein Lagerzapfen an einem Gelenkteil in eine auf den Lagerzapfen abgestimmte Lageraufnahme an dem anderen Gelenkteil eingreift.

Dies ermöglicht eine kompakte und stabile Gelenkanordnung. Die Gelenkanordnung ist zudem einfach herstellbar und unkompliziert zusammenbaubar. Der Lagerzapfen und die Lageraufnahme bilden vorzugsweise Reibpartner einer als Reibungs-Dämpfungsvorrichtung ausgestalteten Dämpfungsvorrichtung.

Ein Vorteil leitet sich daraus ab, dass die Dämpfungsvorrichtung ein Reibdämpferorgan aufweist, das zwischen einem ersten Gelenkteil der Gelenkanordnung und einem zweiten Gelenkteil der Gelenkanordnung vorhanden ist, wobei mit dem Reibdämpferorgan eine Reibwirkung bei einer Relativbewegung zwischen dem ersten Gelenkteil und dem zweiten Gelenkteil bereitgestellt ist.

Dies ist hinsichtlich einer einfachen und zuverlässigen Dämpfungsvorrichtung vorteilhaft. Das Reibdämpferorgan umfasst vorteilhaft z. B. ein elastisches Reibungsorgan aus z. B. einem Elastomer- bzw. Gummi-Material.

Außerdem kann ein Reibungsdämpferorgan einfach und schnell ausgetauscht werden.

Alternativ kann das Reibungsdämpferorgan an einem Gelenkteil oder an beiden Gelenkteilen zum Beispiel integral vorhanden sein.

Vorteilhaft umfasst die Dämpfungsvorrichtung einen fluiddynamischen Dämpfer. Damit kann eine zuverlässige und gleichmäßig wirkende Dämpfung ermöglicht werden.

Der fluiddynamischen Dämpfer ist vorzugsweise ein Fluiddämpfer wie z. B. ein Viskose-, Öl- oder Luftdämpfer zum Beispiel in der Art eines Viskose- oder Öldämpfers oder einer Gasdruckfeder.

Weiter ist es vorteilhaft, dass die Dämpfungsvorrichtung Einstellmittel zur Einstellung der mit der Dämpfungsvorrichtung bereitstellbaren Dämpfwirkung aufweist. Damit kann die Dämpfwirkung angepasst werden an unterschiedliche Dämpfcharakteristika und/oder an jeweils unterschiedlich große zu dämpfende Massen. Mit den Einstellmitteln kann zum Beispiel eine Anpassung an eine mit der Dämpfungsvorrichtung tatsächlich beaufschlagte Masse erfolgen bzw. an unterschiedlich schwere Tischplatten, die je nach Tischplattenmaterial eine andere Masse aufweisen. Bei einer vergleichsweise höheren Masse der Tischplatte kann die Dämpfwirkung entsprechend erhöht werden gegenüber einer Einstellung für eine Dämpfung der Schwenkbewegung für eine geringere Masse der Tischplatte.

Von Vorteil ist es, wenn an der Tischplatte eine gelenkig verbundene Zusatzplatte vorhanden ist, wobei die Zusatzplatte an der Tischplatte gelenkig aufgenommen ist, wobei eine weitere Dämpfungsvorrichtung für die Bewegungsdämpfung der Schwenkbewegung der Zusatzplatte relativ zur Tischplatte ausgebildet ist. Mit der Zusatzplatte kann platzsparend eine Flächenvergrößerung der gesamten nutzbaren Fläche des Tisches umfassend die Tischplatte und die Zusatzplatte durch die zur Tischplatte weitere bzw. zweite Platte bzw. Zusatzplatte erreicht werden. Die Zusatzplatte ist demgemäß aus einer auf der Tischplatte aufgelegten und zu dieser parallelen Position in eine mit der Tischplatte fluchtenden Position um 180 Winkelgrade verschwenkt. Bei der mit der Tischplatte gelenkig verbundenen Zusatzplatte kann durch die weitere Dämpfungsvorrichtung auch die Schwenkbewegung der Zusatzplatte relativ zur Tischplatte vorteilhaft gedämpft erfolgen.

Die Erfindung erstreckt sich vorteilhaft auf eine Sitzreihe umfassend mehrere nebeneinander vorhandene Fluggastsitze gemäß einem der vorhergehend beschriebenen Ausgestaltungen. Damit lassen sich an einer Sitzreihe mit den Fluggastsitzen die diskutierten Vorteil erzielen. In aller Regel ist an jedem einzelnen Fluggastsitz rückseitig eine Tischplatte für eine Person vorhanden, welche hinter dem betreffenden Fluggastsitz in einem weiteren Fluggastsitz der dahinter vorhandenen Sitzreihe sitzt.

### Figurenbeschreibung

Nachfolgend sind weitere Merkmale und Vorteile der Erfindung anhand eines schematisch dargestellten Ausführungsbeispiels näher erläutert.

Im Einzelnen zeigt:
- Fig. 1: in einer perspektivischen Ansicht schräg von vorne eine Sitzreihe mit zwei Fluggastsitzen jeweils umfassend einen Sitzboden, eine Rückenlehne samt rückseitigem Strukturbauteil und eine Beinauflage,
- Fig. 2: die Sitzreihe gemäß Figur 1 in einer perspektivischen Ansicht von schräg hinten,
- Fig. 3: einen Ausschnitt einer Sitzreihe mit zwei Fluggastsitzen von hinten gemäß Fig. 2 mit zwei Tischplatten in Nutzstellung,
- Fig. 4: eine der Tischplatten gemäß Fig. 3 in einer Aufrecht-Stellung mit Gelenkanordnung, umfassend eine Zusatzplatte in Alleindarstellung,
- Fig. 5: die Anordnung gemäß Fig. 4 in einer Nutzstellung der Tischplatte,
- Fig. 6: die Tischplatte gemäß Fig. 5 in einer aufgeklappten Stellung der Zusatzplatte in perspektivischer Ansicht,
- Fig. 7: die Schnittdarstellung gemäß Linie A-A in Fig. 4 und
- Fig. 8: die Schnittdarstellung gemäß Linie B-B in Fig. 5.

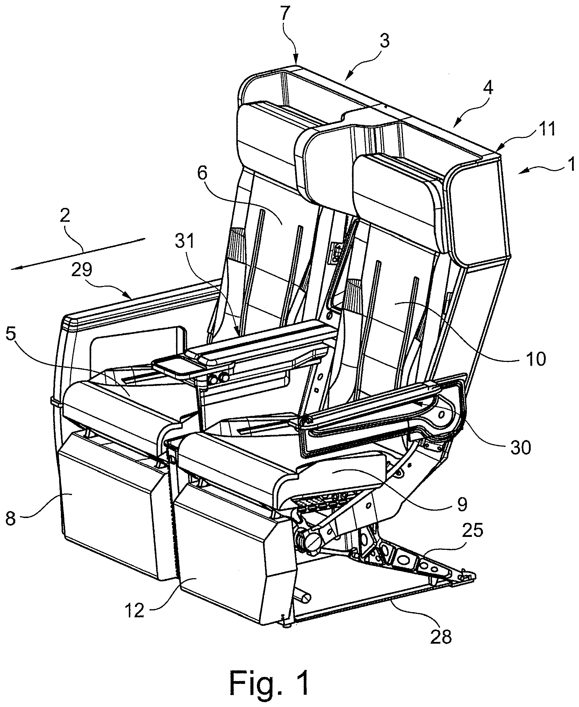

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und ein zur Rückenlehne 6 rückseitiges Strukturbauteil 7 auf, das z. B. als Umhausung ausgebildet ist. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, ein Strukturbauteil 11 bzw. eine Umhausung und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

Die Strukturbauteile 7 und 11 sind mit weiteren Elementen versehen, z. B. rückseitig jeweils mit Zusatzfunktionen versehen. In einem oberen rückseitigen Bereich der Strukturbauteile 7, 11 ist beispielsweise jeweils eine Multimedia-Einheit 32 für digitale Medien vorgesehen, zum Beispiel mit einem elektronischen Ein- und Ausgabegerät bzw. mit einem Touchscreen.

In einem unterhalb an die Multimedia-Einheit 32 anschließenden bzw. mittleren Bereich ist zum Beispiel jeweils eine klappbare Tischplatte 33 für den jeweiligen Fluggastsitz 3 und 4 wie ein Tablett-Tisch ausgebildet.

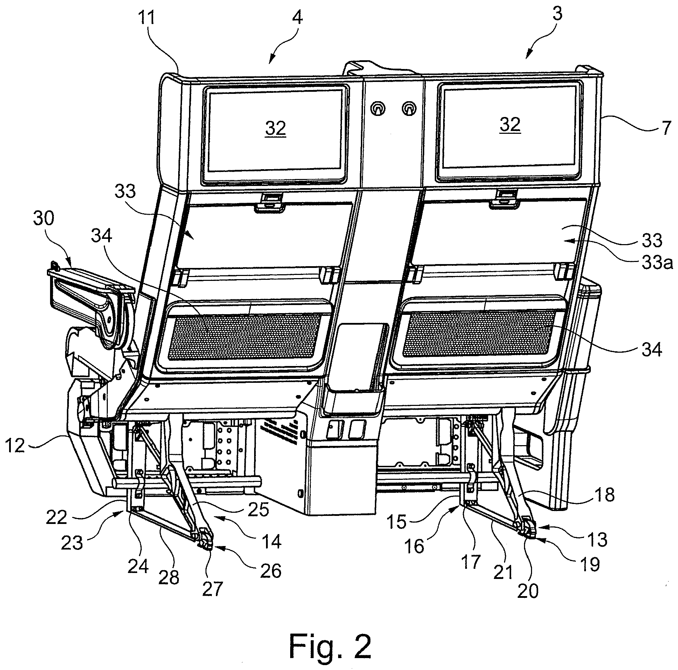

In Fig. 2 sind die Tischplatten 33 in einer nach oben herangeklappten, vertikal stehenden und gesicherten Nichtnutzungs-Stellung bzw. Aufrecht-Stellung dargestellt.

Unterhalb der jeweiligen klappbaren Tischplatte 33 ist ein Staufach 34 beispielswiese zur Unterbringung von Zeitschriften bzw. Prospekten oder anderen Gegenständen vorhanden.

Nachfolgend wird die Tischplatte 33 mit Bezug auf den Fluggastsitz 3 näher erläutert, wobei die Tischplatte 33 am Fluggastsitz 4 identisch aufgebaut ist.

Die Tischplatte 33 mit einer außenseitig vorhandene flächige Überdeckung 33a wie zum Beispiel ein dünnes Abdeckelement, umfasst zwei gelenkig verbundene Plattenbauteile mit einem ersten Plattenbauteil 35 und einem zweiten Plattenbauteil 36, das als Zusatzplatte ausgebildet ist. Zur klappbaren Anordnung der Tischplatte 33 an dem Strukturbauteil 7 bzw. an gegenüberliegenden Wangen 45 ist eine Gelenkanordnung 37 vorgesehen, welche einen Beschlag38 und einen weiteren Beschlag 39 umfasst. Die Gelenkanordnung 37 wirkt zwischen dem Plattenbauteil 35 und dem Strukturbauteil 7.

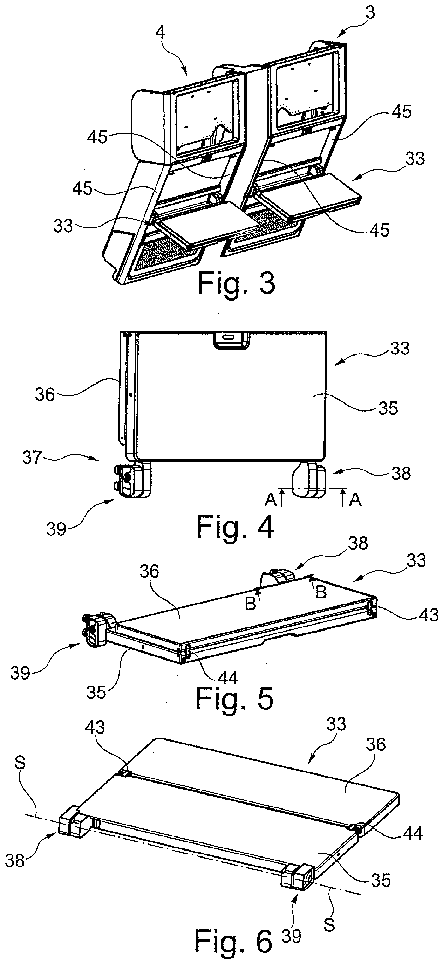

Gemäß Fig. 3 sind die Tischplatten 33 mit der jeweiligen Zusatzplatte bzw. dem Plattenbauteil 36 in einer gegenüber Fig. 2 herabgeklappten Nutzstellung dargestellt. Das Plattenbauteil 36 ist angeklappt oberhalb des Plattenbauteils 35 auf diesem aufliegend vorhanden.

Die Tischplatte 33 mit der Gelenkanordnung 37 bzw. den Beschlägen 38 und 39 ist in Fig. 4 in Alleindarstellung gezeigt. Fig. 4 zeigt die Aufrecht-Stellung der Tischplatte 33 mit den aneinander flächig anliegenden Plattenbauteilen 35 und 36. Dabei ist das Plattenbauteil 35 über die Gelenkanordnung 37 gelenkig an dem Strukturbauteil 7 vorhanden.

Die Gelenkanordnung 37 umfasst eine Dämpfungsvorrichtung 40. Vorzugsweise ist die Dämpfungsvorrichtung 40 in genau einem Beschlag der beiden Beschläge 38 oder 39 vorgesehen oder in beiden Beschlägen 38 und 39 integriert.

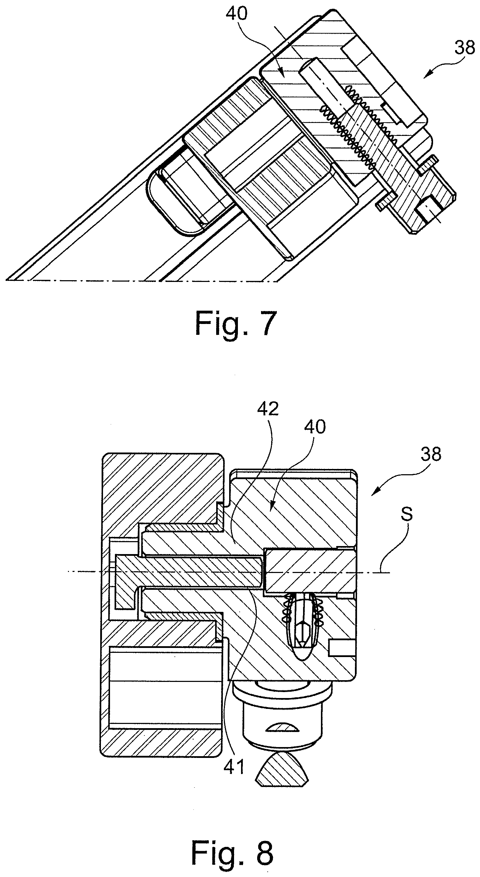

Anhand dem Beschlag 38 ist in den Schnittansichten gemäß der Fig. 7 und 8 die Dämpfungsvorrichtung 40 erläutert.

An bzw. auf einer Tischplattendrehachse S ist ein Reibungselement 41 und ein mit dem Reibungselement 41 zusammenwirkendes Dämpfungselement 42 vorhanden, die bei einer Drehung der Tischplatte 33 bzw. des Plattenbauteils 35 um die Tischplattendrehachse S aneinander reibend in Anlage gelangen und so zu einer Bewegungsdämpfung der Schwenkbewegung der Tischplatte 33 bzw. des Plattenbauteils 35 führt. Die Dämpf- bzw. Bremswirkung beginnt vorzugsweise nach einem Verschwenken des Plattenbauteils 35 aus der Aufrecht-Stellung nach circa 45 Winkelgraden. Dies entspricht einem ungedämpften ersten Schwenkbereich und einem gedämpften anschließenden bzw. zweiten Schwenkbereich von etwa 50 % bei einem Gesamtschwenkbereich der Tischplatte 33 bzw. des Plattenbauteils 35 von circa 90 Winkelgraden.

Das Plattenbauteil 36 ist über weitere Gelenke 43 und 44 mit dem Plattenbauteil 35 gelenkig verbunden. Vorzugsweise ist jeweils eine Dämpfungsvorrichtung in den beiden Gelenke 43 und 44 vorgesehen zur Bewegungsdämpfung der Schwenkbewegung des Plattenbauteils 36 gegenüber dem Plattenbauteil 35.

### Bezugszeichenliste

- 1: Sitzreihe
- 2: Sitzrichtung
- 3: Fluggastsitz
- 4: Fluggastsitz
- 5: Sitzboden
- 6: Rückenlehne
- 7: Strukturbauteil
- 8: Beinauflage
- 9: Sitzboden
- 10: Rückenlehne
- 11: Strukturbauteil
- 12: Beinauflage
- 13: Stützbein
- 14: Stützbein
- 15: Strebe
- 16: Endbereich
- 17: Montagestelle
- 18: Strebe
- 19: Endbereich
- 20: Montagestelle
- 21: Verstrebungselement
- 22: Strebe
- 23: Endbereich
- 24: Montagestelle
- 25: Strebe
- 26: Endbereich
- 27: Montagestelle
- 28: Verstrebungselement
- 29: Armlehne
- 30: Armlehne
- 31: Konsole
- 32: Multimedia-Einheit
- 33: Tischplatte
- 33a: Überdeckung
- 34: Staufach
- 35: Plattenbauteil
- 36: Plattenbauteil
- 37: Gelenkanordnung
- 38: Beschlag
- 39: Beschlag
- 40: Dämpfungsvorrichtung
- 41: Reibungselement
- 42: Dämpfungselement
- 43: Gelenk
- 44: Gelenk
- 45: Wange

## Patentansprüche

1. Fluggastsitz (3, 4) umfassend ein Strukturbauteil (7, 11), an welchem eine Tischplatte (33) des Fluggastsitzes (3, 4) über eine Gelenkanordnung (37) um eine Schwenkachse der Gelenkanordnung (37) schwenkbar aufgenommen ist, so dass die Tischplatte (33) aus einer an dem Strukturbauteil (7, 11) herangeklappten Aufrecht-Stellung der Tischplatte (33) in eine an dem Strukturbauteil (7, 11) vorstehende Nutzstellung der Tischplatte (33) und zurück aus der Nutzstellung in die Aufrecht-Stellung schwenkbar ist, wobei die Gelenkanordnung (37) eine Dämpfungsvorrichtung (40) umfasst, welche zur Bewegungsdämpfung der Schwenkbewegung der Tischplatte (33) zwischen der Aufrecht-Stellung der Tischplatte (33) und der Nutzstellung der Tischplatte (33) ausgebildet ist, **dadurch gekennzeichnet, dass** die Dämpfungsvorrichtung (40) derart abgestimmt ist, dass die Bewegungsdämpfung der Schwenkbewegung der Tischplatte (33) über einen Teil-Schwenkbereich eines möglichen Gesamt-Schwenkbereichs der Schwenkbewegung der Tischplatte (33) erfolgt, wobei der Gesamt-Schwenkbereich den Schwenkbereich abdeckt, über welchen die Tischplatte (33) aus der Aufrecht-Stellung in die Nutzstellung verschwenkt.

2. Fluggastsitz nach Anspruch 1, **dadurch gekennzeichnet, dass** im montierten Zustand der Tischplatte (33) an dem Fluggastsitz (3, 4) die Dämpfungsvorrichtung (40) in einem nach außen getrennten Innenbereich der Gelenkanordnung (37) derart untergebracht vorhanden ist, dass die Dämpfungsvorrichtung (40) an der Gelenkanordnung (37) von außen nicht sichtbar ist.

3. Fluggastsitz nach einem der vorhergehenden Ansprüche, **dadurch gekennzeichnet, dass** der gedämpfte Teil-Schwenkbereich die Schwenkbewegung der Tischplatte (33) vor Erreichen der Nutzstellung der Tischplatte (33) betrifft.

4. Fluggastsitz nach einem der vorhergehenden Ansprüche, **dadurch gekennzeichnet, dass** der Teil-Schwenkbereich einen Schwenkbereich abdeckt, welcher mindestens 50 % des Gesamt-Schwenkbereichs der Schwenkbewegung der Tischplatte (33) beträgt, über welchen die Tischplatte (33) aus der Aufrecht-Stellung der Tischplatte (33) in die Nutzstellung der Tischplatte (33) verschwenkt.

5. Fluggastsitz nach einem der vorhergehenden Ansprüche, **dadurch gekennzeichnet, dass** der gedämpfte Teil-Schwenkbereich die Schwenkbewegung der Tischplatte (33) mindestens 30 Winkelgrade, vorzugsweise mindestens 40 Winkelgrade, vorzugsweise mindestens 50 Winkelgrade der Schwenkbewegung der Tischplatte (33) beträgt.

6. Fluggastsitz nach einem der vorhergehenden Ansprüche, **dadurch gekennzeichnet, dass** die Tischplatte (33) an einer Wange (45) des Strukturbauteils (7, 11) mit der Gelenkanordnung (37) verbunden ist, vorzugsweise mit zwei Beschlägen (38, 39) der Gelenkanordnung (37) an gegenüberliegenden Wangen (45) des Strukturbauteils (7, 11) angelenkt ist.

7. Fluggastsitz nach einem der vorhergehenden Ansprüche, **dadurch gekennzeichnet, dass** die Gelenkanordnung (37) im Bereich der Schwenkachse ein erstes Gelenkteil und ein zweites Gelenkteil umfasst, die relativ zueinander drehbar miteinander verbunden sind, wobei das erste Gelenkteil mit der Tischplatte (33) verbunden ist und das zweite Gelenkteil mit dem Strukturbauteil (7, 11) verbunden ist, wobei ein Lagerzapfen an einem Gelenkteil in eine auf den Lagerzapfen abgestimmte Lageraufnahme an dem anderen Gelenkteil eingreift.

8. Fluggastsitz nach einem der vorhergehenden Ansprüche, **dadurch gekennzeichnet, dass** die Dämpfungsvorrichtung (40) ein Reibdämpferorgan wie ein Reibungselement (41) aufweist, das zwischen einem ersten Gelenkteil der Gelenkanordnung (37) und einem zweiten Gelenkteil der Gelenkanordnung (37) vorhanden ist, wobei mit dem Reibdämpferorgan eine Reibwirkung bei einer Relativbewegung zwischen dem ersten Gelenkteil und dem zweiten Gelenkteil bereitgestellt ist.

9. Fluggastsitz nach einem der vorhergehenden Ansprüche, **dadurch gekennzeichnet, dass** die Dämpfungsvorrichtung einen fluiddynamischen Dämpfer umfasst.

10. Fluggastsitz nach einem der vorhergehenden Ansprüche, **dadurch gekennzeichnet, dass** die Dämpfungsvorrichtung (40) Einstellmittel zur Einstellung der mit der Dämpfungsvorrichtung bereitstellbaren Dämpfwirkung aufweist.

11. Fluggastsitz nach einem der vorhergehenden Ansprüche, **dadurch gekennzeichnet, dass** an einem Plattenbauteil (35) der Tischplatte (33) ein gelenkig verbundenes Plattenbauteil (36) vorhanden ist, wobei das Plattenbauteil (36) an dem Plattenbauteil (35) gelenkig aufgenommen ist, wobei eine weitere Dämpfungsvorrichtung für die Bewegungsdämpfung der Schwenkbewegung des Plattenbauteils (36) relativ zum Plattenbauteil (35) ausgebildet ist.

12. Sitzreihe (1) umfassend mehrere nebeneinander vorhandene Fluggastsitze (3, 4) gemäß einem der vorhergehenden Ansprüche.

## Claims

1. Aircraft-passenger seat (3, 4) comprising a structural component (7, 11) on which a table top (33) of the aircraft-passenger seat (3, 4) is mounted via an articulation arrangement (37) such that it can be pivoted about a pivot axis of the articulation arrangement (37), so that the table top (33) can be pivoted from an upright position of the table top (33), in which the latter has been swung up against the structural component (7, 11), to a use position of the table top (33), in which the latter projects from the structural component (7, 11), and back out of the use position into the upright position, wherein the articulation arrangement (37) comprises a damping device (40), which is designed to damp the pivoting movement of the table top (33) between the upright position of the table top (33) and the use position of the table top (33), **characterized in that** the damping device (40) is adjusted in such a way that the pivoting movement of the table top (33) is damped via a partial pivoting range of a possible overall pivoting range of the pivoting movement of the table top (33), wherein the overall pivoting range covers the pivoting range over which the table top (33) pivots from the upright position into the use position.

2. Aircraft-passenger seat according to Claim 1, **characterized in that**, in the state in which the table top (33) has been installed on the aircraft-passenger seat (3, 4), the damping device (40) is accommodated in an interior region of the articulation arrangement (37), this interior region being partitioned off from the outside, such that the damping device (40) on the articulation arrangement (37) cannot be seen from the outside.

3. Aircraft-passenger seat according to one of the preceding claims, **characterized in that** the damped partial pivoting range concerns the pivoting movement of the table top (33) prior to the use position of the table top (33) being reached.

4. Aircraft-passenger seat according to one of the preceding claims, **characterized in that** the partial pivoting range covers a pivoting range which is at least 50% of the overall pivoting range of the pivoting movement of the table top (33) and over which the table top (33) pivots from the upright position of the table top (33) into the use position of the table top (33).

5. Aircraft-passenger seat according to one of the preceding claims, **characterized in that** the damped partial pivoting range of the pivoting movement of the table top (33) is at least 30 degrees, preferably at least 40 degrees, preferably at least 50 degrees, of the pivoting movement of the table top (33).

6. Aircraft-passenger seat according to one of the preceding claims, **characterized in that** the table top (33) is connected to a sidepiece (45) of the structural component (7, 11) by the articulation arrangement (37), preferably is articulated on opposite.sidepieces (45) of the structural component (7, 11) by two fittings (38, 39) of the articulation arrangement (37).

7. Aircraft-passenger seat according to one of the preceding claims, **characterized in that**, in the region of the pivot axis, the articulation arrangement (37) comprises a first articulation part and a second articulation part, which are connected to one another such that they can be rotated relative to one another, wherein the first articulation part is connected to the table top (33) and the second articulation part is connected to the structural component (7, 11), wherein a bearing pin on one articulation part engages in a bearing mount on the other articulation part, the bearing mount being coordinated with the bearing pin.

8. Aircraft-passenger seat according to one of the preceding claims, **characterized in that** the damping device (40) has a frictional-damper member, such as a friction element (41), which is present between a first articulation part of the articulation arrangement (37) and a second articulation part of the articulation arrangement (37), wherein the frictional-damper member provides for friction during relative movement between the first articulation part and the second articulation part.

9. Aircraft-passenger seat according to one of the preceding claims, **characterized in that** the damping device comprises a fluid-dynamic damper.

10. Aircraft-passenger seat according to one of the preceding claims, **characterized in that** the damping device (40) has adjustment means for adjusting the damping action which can be provided by the damping device.

11. Aircraft-passenger seat according to one of the preceding claims, **characterized in that** a panel component (35) of the table top (33) has a panel component (36) connected to it in an articulated manner, wherein the panel component (36) is mounted in an articulated manner on the panel component (35), wherein there is a further damping device provided for damping the pivoting movement of the panel component (36) relative to the panel component (35).

12. Seat row (1) comprising a number of aircraft-passenger seats (3, 4) according to one of the preceding claims which are present one beside the other.

## Revendications

1. Siège de passager d'aéronef (3, 4) comprenant un composant de structure (7, 11) sur lequel un plateau de table (33) du siège de passager d'aéronef (3, 4) est reçu de manière à pouvoir pivoter par l'intermédiaire d'un agencement d'articulation (37) autour d'un axe de pivotement de l'agencement d'articulation (37), de telle sorte que le plateau de table (33) peut pivoter d'une position verticale du plateau de table (33) rabattue sur le composant de structure (7, 11) à une position d'utilisation du plateau de table (33) en saillie sur le composant de structure (7, 11) et en retour de la position d'utilisation à la position verticale, l'agencement d'articulation (37) comprenant un dispositif d'amortissement (40), qui est réalisé pour amortir le mouvement de pivotement du plateau de table (33) entre la position verticale du plateau de table (33) et la position d'utilisation du plateau de table (33), **caractérisé en ce que** le dispositif d'amortissement (40) est adapté de telle sorte que l'amortissement du mouvement de pivotement du plateau de table (33) s'effectue sur une plage de pivotement partielle d'une plage de pivotement totale possible du mouvement de pivotement du plateau de table (33), la plage de pivotement totale couvrant la plage de pivotement sur laquelle le plateau de table (33) pivote de la position verticale à la position d'utilisation.

2. Siège de passager d'aéronef selon la revendication 1, **caractérisé en ce qu'**à l'état monté du plateau de table (33) sur le siège de passager d'aéronef (3, 4), le dispositif d'amortissement (40) est présent en étant logé dans une zone intérieure, séparée de l'extérieur, de l'agencement d'articulation (37), de telle sorte que le dispositif d'amortissement (40) sur l'agencement d'articulation (37) n'est pas visible de l'extérieur.

3. Siège de passager d'aéronef selon l'une quelconque des revendications précédentes, **caractérisé en ce que** la plage de pivotement partielle amortie concerne le mouvement de pivotement du plateau de table (33) avant d'atteindre la position d'utilisation du plateau de table (33).

4. Siège de passager d'aéronef selon l'une quelconque des revendications précédentes, **caractérisé en ce que** la plage de pivotement partielle couvre une plage de pivotement qui est d'au moins 50 % de la plage de pivotement totale du mouvement de pivotement du plateau de table (33) sur laquelle le plateau de table (33) pivote de la position verticale du plateau de table (33) à la position d'utilisation du plateau de table (33).

5. Siège de passager d'aéronef selon l'une quelconque des revendications précédentes, **caractérisé en ce que** la plage de pivotement partielle amortie du mouvement de pivotement du plateau de table (33) est d'au moins 30 degrés angulaires, de préférence d'au moins 40 degrés angulaires, de préférence d'au moins 50 degrés angulaires du mouvement de pivotement du plateau de table (33).

6. Siège de passager d'aéronef selon l'une quelconque des revendications précédentes, **caractérisé en ce que** le plateau de table (33) est relié à l'agencement d'articulation (37) sur une joue (45) du composant de structure (7, 11), de préférence est articulé avec deux ferrures (38, 39) de l'agencement d'articulation (37) sur des joues opposées (45) du composant de structure (7, 11) .

7. Siège de passager d'aéronef selon l'une quelconque des revendications précédentes, **caractérisé en ce que** l'agencement d'articulation (37) comprend, dans la zone de l'axe de pivotement, une première partie d'articulation et une deuxième partie d'articulation qui sont reliées l'une à l'autre de manière à pouvoir tourner l'une par rapport à l'autre, la première partie d'articulation étant reliée au plateau de table (33) et la deuxième partie d'articulation étant reliée au composant de structure (7, 11), un tourillon sur une partie d'articulation s'engageant dans un logement de palier adapté au tourillon sur l'autre partie d'articulation.

8. Siège de passager d'aéronef selon l'une quelconque des revendications précédentes, **caractérisé en ce que** le dispositif d'amortissement (40) présente un organe d'amortissement par friction, tel qu'un élément de friction (41), qui est présent entre une première partie d'articulation de l'agencement d'articulation (37) et une deuxième partie d'articulation de l'agencement d'articulation (37), l'organe d'amortissement par friction fournissant un effet de friction lors d'un mouvement relatif entre la première partie d'articulation et la deuxième partie d'articulation.

9. Siège de passager d'aéronef selon l'une quelconque des revendications précédentes, **caractérisé en ce que** le dispositif d'amortissement comprend un amortisseur fluidodynamique.

10. Siège de passager d'aéronef selon l'une quelconque des revendications précédentes, **caractérisé en ce que** le dispositif d'amortissement (40) présente des moyens de réglage pour régler l'effet d'amortissement pouvant être fourni par le dispositif d'amortissement.

11. Siège de passager d'aéronef selon l'une quelconque des revendications précédentes, **caractérisé en ce qu'**un composant de plateau (36) relié de manière articulée est présent sur un composant de plateau (35) du plateau de table (33), le composant de plateau (36) étant reçu de manière articulée sur le composant de plateau (35), un autre dispositif d'amortissement étant réalisé pour amortir le mouvement de pivotement du composant de plateau (36) par rapport au composant de plateau (35).

12. Rangée de sièges (1) comprenant plusieurs sièges de passager d'aéronef (3, 4) selon l'une quelconque des revendications précédentes, présents les uns à côté des autres.
